# EUROPÄISCHE PATENTSCHRIFT

(11) **EP 2 808 547 B1**
(45) Veröffentlichungstag und Bekanntmachung des Hinweises auf die Patenterteilung: **20.07.2016**
(21) Anmeldenummer: 13170034.6
(22) Anmeldetag: 31.05.2013
(51) Int. Cl.: F04D 13/06, F04D 29/42

(54) **Betätigungseinrichtung für ein Pumpenaggregat**
Actuation device for a pump assembly
Dispositif d'actionnement pour un module de pompe

(43) Veröffentlichungstag der Anmeldung: 03.12.2014
(73) Patentinhaber: Grundfos Holding A/S, 8850 Bjerringbro (DK)
(72) Erfinder: Nielsen, Tonny Ring, Birgittelyst, 8800 Viborg (DK); Kjær, Oluf, 8850 Bjerringbro (DK); Rasmussen, Troels Holtum, 8850 Bjerringbro (DK)
(74) Vertreter: Patentanwälte Vollmann & Hemmer

(56) Entgegenhaltungen:
- EP-A1- 2 072 826
- EP-A1- 2 072 827
- EP-A2- 1 041 595
- DE-A1- 1 653 741
- DE-A1- 2 032 898
- DE-A1- 19 534 179
- DE-U1- 29 509 338

## Beschreibung

Die Erfindung betrifft eine Betätigungseinrichtung, insbesondere eine Deblockiereinrichtung für ein Pumpenaggregat.

Bei nasslaufenden Pumpenaggregaten, d. h. bei Pumpenaggregaten mit elektrischen Antriebsmotoren, welche als Spaltrohrmotoren ausgebildet sind, in denen der Rotorraum mit der zu fördernden Flüssigkeit gefüllt ist, besteht die Gefahr, dass im Stillstand aufgrund von Verunreinigungen in der Flüssigkeit der Rotor in den Lagern blockiert. Es war daher lange Zeit üblich, am Axialende des Spaltrohres eine Verschlussschraube vorzusehen, welche sich öffnen lässt, um mit einem Werkzeug die im Spaltrohr gelegene Welle manuell drehen und so den Rotor deblockieren zu können. Nachteilig bei diesem System ist, dass das Spaltrohr geöffnet werden muss, sodass Flüssigkeit aus dem Inneren des Spaltrohres nach außen dringen kann.

Ein ähnliches Pumpenaggregat ist z. B. aus DE 1 653 741 bekannt.

Ferner ist es bekannt, an dem axialen Ende des Spaltrohres ein federbelastetes Eingriffselement vorzusehen, welches von außen mit einem Werkzeug gedrückt werden kann und dann im Inneren des Spaltrohres mit der Welle in Eingriff tritt, um diese zur Deblockierung drehen zu können. Im Normalbetrieb wird das Eingriffselement über eine Feder von der Welle außer Eingriff gehalten. Problematisch bei derartigen Systemen ist, dass die Feder aufgrund Verunreinigungen in der Flüssigkeit blockieren kann oder die Vorrichtung, da sie das Spaltrohr durchbricht, nicht ausreichend dicht ist, sodass Flüssigkeit nach außen austreten kann.

Vor dem Hintergrund dieser Problematik ist es Aufgabe der Erfindung, eine Betätigungseinrichtung, insbesondere eine Deblockiereinrichtung für ein Pumpenaggregat bereitzustellen, welches zum Einsatz in einem Spaltrohr eines Pumpenaggregates zur Kraftbeaufschlagung einer in dem Spaltrohr gelegenen Welle vorgesehen ist, welche dahingehend verbessert ist, dass die Zuverlässigkeit der Funktion erhöht und eine verbesserte Dichtigkeit erreicht wird.

Diese Aufgabe wird durch eine Betätigungseinrichtung mit den in Anspruch 1 angegebenen Merkmalen sowie durch ein Pumpenaggregat mit einer solchen Betätigungseinrichtung mit den im Anspruch 18 angegebenen Merkmalen gelöst. Bevorzugte Ausführungsformen ergeben sich aus den Unteransprüchen, der nachfolgenden Beschreibung sowie den beigefügten Figuren.

Die erfindungsgemäße Betätigungseinrichtung ist zur Verwendung in einem Pumpenaggregat vorgesehen. Dabei ist die Betätigungseinrichtung so ausgestaltet, dass sie in ein Spaltrohr eines Pumpenaggregates eingesetzt werden kann, um eine in dem Spaltrohr gelegene Welle mit einer Kraft zu beaufschlagen. Dies kann eine in axialer Richtung auf die Welle wirkende Kraft und/oder ein auf die Welle wirkender Drehmoment sein. Unter einem Spaltrohr in diesem Sinne ist auch ein Spalttopf zu verstehen.

Insbesondere handelt es sich bei der erfindungsgemäßen Betätigungseinrichtung um eine Deblockiereinrichtung, welche dafür vorgesehen ist, eine blockierte Welle im Inneren eines Spaltrohres durch Krafteinwirkung von außen zu lösen. Auch dies kann durch lineare Krafteinwirkung oder Aufbringen eines Drehmomentes geschehen, um eine Blockierung der Welle in ihren Lagern zu lösen. Um ein Lösen durch Aufbringen einer Axialkraft zu erreichen, ist die Welle im Spaltrohr bzw. in ihren Lagern vorzugsweise um ein gewisses Maß axial beweglich. Die Betätigungseinrichtung gemäß der Erfindung kann jedoch auch genutzt werden, um andere Betätigungsfunktionen im Inneren des Spaltrohrs durch eine Krafteinwirkung von außen zu bewirken. So kann über die Betätigungseinrichtung beispielsweise der Betriebszustand eines Pumpenaggregates geprüft werden. Beispielsweise kann auch ein mögliches Spiel der Welle in axialer Richtung geprüft werden, welches beispielsweise von einem Lager- oder Laufradverschleiß herrühren kann. So kann ein Verschleiß des Pumpenaggregates mit der erfindungsgemäßen Betätigungsseinrichtung geprüft werden.

Um die erfindungsgemäße Betätigungseinrichtung in einem Spaltrohr fixieren zu können, weist die Betätigungseinrichtung einen Träger auf, welcher so ausgebildet ist, dass er mit dem Spaltrohr verbunden werden kann, um die gesamte Betätigungseinrichtung an dem Spaltrohr, d. h. insbesondere einer Öffnung des Spaltrohres zu fixieren. Eine solche Öffnung ist vorzugsweise am Axialende des Spaltrohres, d. h. in einer axialen Stirnseite zentrisch angeordnet, sodass sie genau dem Axialende einer Welle in dem Spaltrohr gegenüberliegt. Der Träger weist einen Durchgang auf, welcher sich entlang einer Längsachse der Betätigungseinrichtung bzw. des Trägers erstreckt. Diese Längsachse liegt vorzugsweise bei bestimmungsgemäßen Einbau der Betätigungseinrichtung in ein Pumpenaggregat entlang der Drehachse des Pumpenaggregates bzw. der in dem Spaltrohr des Pumpenaggregates angeordneten Welle. In diesem Durchgang ist erfindungsgemäß ein Betätigungsstift geführt. Dabei kann der Betätigungsstift in dem Durchgang in axialer Richtung entlang der Längsachse bewegbar und zusätzlich in dem Durchgang um die Längsachse drehbar geführt sein. Die Drehbarkeit des Betätigungsstiftes ermöglicht eine Drehmomentübertragung auf die Welle eines Pumpenaggregates, während es die lineare Bewegbarkeit ermöglicht, eine axiale Kraft auf die Welle aufzubringen und den Betätigungsstift mit der Welle in und außer Eingriff bzw. Anlage zu bringen.

Der Betätigungsstift weist an seinem ersten Axialende eine Werkzeugaufnahme auf. Diese Werkzeugaugnahme dient dazu, mit einem Werkzeug zur Kraftübertragung in Eingriff zu treten. Ein Werkzeug in diesem Sinne kann auch ein anderes sich anschließendes Bauteil, mit dessen Hilfe eine Kraft auf den Betätigungsstift aufgebracht werden soll, sein. Insbesondere kann es sich hierbei um ein weiteres Bauteil des Pumpenaggregates handeln. Die Werkzeugaufnahme ist insbesondere so ausgebildet, dass sie eine Zentrierung des Werkzeuges an dem Betätigungsstift ermöglicht, sodass eine zentrische Krafteinleitung sichergestellt wird und ein Abrutschen des Werkzeuges verhindert wird. Dabei kann die Werkzeugaufnahme zum Übertragen einer Axialkraft in Richtung der Längsachse und/oder zur Übertragung eines Drehmomentes um die Längsachse ausgebildet sein. Bevorzugt ist die Werkzeugaufnahme passend zu üblichen Schraubendrehern oder -schlüsseln ausgebildet.

An seinem entgegengesetzten zweiten Axialende weist der Betätigungsstift einen Eingriffsbereich zur Kraftübertragung auf eine Welle auf. D. h. der Eingriffsbereich ist dafür vorgesehen, mit einem Axialende der Welle in Kontakt bzw. in Eingriff zu kommen, um eine Kraft von dem Betätigungsstift auf die Welle zu übertragen. Zur Übertragung einer reinen Axialkraft kann der Eingriffsbereich als Anlagefläche ausgebildet sein, welcher an dem Stirnende der Welle zur Anlage kommt. Zur Drehmomentübertragung ist der Eingriffsbereich so geformt, dass er mit einem korrespondierenden, insbesondere komplementär geformten Eingriffsbereich am Axialende der Welle formschlüssig und/oder kraftschlüssig in Eingriff treten kann, um einen Drehmoment auf die Welle zu übertragen.

Zwischen dem Betätigungsstift und dem Träger ist ein Federelement angeordnet, welches den Betätigungsstift in Richtung seines ersten Axialendes mit einer Federkraft beaufschlagt. Das Federelement kann so den Betätigungsstift in eine Ruhelage drücken, in welcher der Eingriffsbereich von der Welle im Inneren des Spaltrohres außer Eingriff gehalten wird. Um den Eingriffsbereich mit der Welle in Eingriff bzw. Anlage zu bringen, muss der Betätigungsstift entgegen der Federkraft linear in Richtung der Längsachse um ein bestimmtes Maß bewegt werden. Wird die dazu erforderliche Kraft gelöst, bewegt sich der Betätigungsstift durch das Federelement wieder in seine Ruhelage zurück und tritt von der Welle außer Eingriff. Dabei ist vorzugsweise ein Anschlag vorgesehen, an welchem der Betätigungsstift in seiner Ruhelage anliegt, sodass der Anschlag die Längsbeweglichkeit des Betätigungsstiftes in eine Richtung begrenzt. In der entgegengesetzten Bewegungsrichtung bildet das Federelement selber den Anschlag, welcher die maximale Längsbeweglichkeit des Betätigungselementes begrenzt. Wenn die Feder vollständig gestaucht ist, lässt sich der Betätigungsstift nicht weiter in Längsrichtung bewegen. So wird die Längsbeweglichkeit des Betätigungsstiftes in beiden Richtung durch Anschläge begrenzt, wobei in der Richtung, in welcher der Betätigungsstift mit der Welle in Eingriff gebracht wird, ein Endanschlag vorzugsweise so gelegen ist, dass im Funktionszustand der Betätigungsstift mit der Welle in Eingriff bzw. Anlage tritt, bevor der Endanschlag erreicht ist.

Erfindungsgemäß ist zwischen dem Träger und dem Betätigungsstift in einem Bereich zwischen dem Federelement und dem zweiten Axialende, welches den Eingriffsbereich trägt, eine Dichtung angeordnet. Diese dichtet den Spalt zwischen Träger und Betätigungsstift ab. Die Anordnung der Dichtung an dieser Position hat den Vorteil, dass das Federelement außerhalb des mit Flüssigkeit beaufschlagten Raumes gelegen ist. Auf diese Weise wird eine Beeinträchtigung der Funktion und der Haltbarkeit des Federelementes durch die Flüssigkeit im Inneren des Spaltrohres verhindert. D. h. das Federelement liegt im trockenen Raum. Darüber hinaus ermöglicht diese Ausgestaltung den Bereich der Betätigungseinrichtung, in welchem das Federelement gelegen ist, zusätzlich mit einem Schmierstoff zu versehen, durch welchen die Beweglichkeit verbessert und die Haltbarkeit der Dichtungsanlage bei Bewegung erhöht wird. Ferner kann die Dichtung möglichst nah am Spaltrohr angeordnet werden und die Baulänge der Betätigungseinrichtung, welche sich im Inneren des Spaltrohres erstreckt, kurz gehalten werden, sodass im Inneren des Spaltrohres für die Betätigungseinrichtung im Wesentlichen kein zusätzlicher Bauraum vorgesehen werden muss. Dadurch kann der flüssigkeitsgefüllte Rotorraum in axialer Richtung kurz gehalten werden.

Der Träger ist vorzugsweise zur dichten Verbindung mit dem Spaltrohr ausgebildet. D. h. der Träger wird gegenüber dem Spaltrohr abgedichtet, sodass er die im Spaltrohr zur Aufnahme der Betätigungseinrichtung vorgesehene Öffnung dicht verschließt und ein Austritt von Flüssigkeit verhindert wird.

Besonders bevorzugt ist der Träger zum Verschweißen mit einem Spaltrohr ausgebildet und weist dazu weiter bevorzugt einen umfänglichen Kragen zur Aufnaht einer Schweißnaht auf. Durch Ausbilden einer Schweißnaht zwischen Träger und Spaltrohr kann eine dauerhafte und dichte Verbindung zwischen der Betätigungseinrichtung und dem Spaltrohr geschaffen werden. Dies gilt insbesondere dann, wenn beide Bauteile aus Metall ausgebildet sind. Eine erforderliche Schweißnaht kann beispielsweise durch Laserschweißen ausgebildet werden. Laserschweißen hat den Vorteil, dass die eingebrachte Wärmemenge gering gehalten wird, sodass beim Verschweißen weitere Bauteile, insbesondere die Dichtung, nicht beschädigt werden. Dies ist insbesondere dann von Vorteil, wenn die Betätigungseinrichtung im montierten Zustand mit dem Spaltrohr verschweißt werden soll.

Bevorzugt ist die Betätigungseinrichtung als vormontierte Baugruppe ausgebildet, welche als Ganzes mit einem Spaltrohr verbunden, insbesondere verschweißt werden bzw. in eine Öffnung des Spaltrohres eingesetzt werden kann. Dies hat den Vorteil, dass die gesamte Betätigungseinrichtung unabhängig von dem Pumpenaggregat vormontiert werden kann.

Der umfängliche Kragen des Trägers wird vorzugsweise von einem vollumfänglich radial nach außen auskragenden Vorsprung gebildet, welcher weiter bevorzugt an einer axialen Stirnseite des Spaltrohres bzw. Spalttopfes zur Anlage kommen kann und dort verschweißt werden kann. So wird ein ausreichend großer Bereich zur Aufnahme einer Schweißnaht geschaffen. Gleichzeitig ermöglicht diese Ausgestaltung die Schweißnaht beabstandet zu der Dichtung zu erzeugen, sodass die thermische Belastung der Dichtung gering gehalten wird.

Gemäß einer bevorzugten Ausführungsform weist der Betätigungsstift an seinem ersten Axialende eine als Kreuzschlitz ausgebildete Werkzeugaufnahme auf. Ein solcher Kreuzschlitz kann so ausgebildet sein, dass ein Eingriff mit einem üblichen Kreuzschlitz-Schraubendreher möglich ist. Der Kreuzschlitz ermöglicht eine selbsttätige Zentrierung des Werkzeuges in der Werkzeugaufnahme und eine gute Drehmomentübertragung, welche erforderlich ist, wenn der Betätigungsstift zur Drehung eines Pumpenaggregates gedreht werden soll. Alternativ kann die Werkzeugaufnahme jedoch auch anders geformt, insbesondere auch zur Drehmomentübertragung anders geformt sein, z. B. eine andere nicht rotationssymmetrische Formgebung aufweisen. Soll lediglich eine axiale Kraftübertragung auf den Betätigungsstift erfolgen, kann die Werkzeugaufnahme auch als Anschlagfläche ausgebildet sein, an welcher ein Werkzeug zur linearen Kraftübertragung entlang der Längsachse des Betätigungsstiftes zur Anlage kommt. Dabei kann eine solche Anschlagfläche ggf. eine Vertiefung zur Zentrierung des Werkzeuges und zum Verhindern eines Abrutschens des Werkzeuges aufweisen.

Der Eingriffsbereich am zweiten Axialende des Betätigungsstiftes, welcher zur Anlage bzw. dem Eingriff mit einer Welle eines Pumpenaggregates vorgesehen ist, weist bevorzugt einen rechteckigen und insbesondere einen quadratischen Querschnitt auf. Dieser Eingriffsbereich ist bevorzugt so ausgebildet, dass er mit einem korrespondierenden komplementären Eingriffsbereich am Axialende einer Welle des Pumpenaggregates formschlüssig in Eingriff treten kann. Besonders bevorzugt ist ein sich in Richtung der Längsachse zum freien Ende hin verjüngender Eingriffsbereich mit quadratischem Querschnitt vorgesehen. Dieser ermöglicht einen sicheren Eingriff mit einer korrespondierend bzw. komplementär geformten Ausnehmung am Axialende einer Welle und stellt darüber hinaus sicher, dass der Eingriffsbereich beim Betrieb des Antriebsmotors des Pumpenaggregates von der Welle auch leicht wieder außer Eingriff treten kann.

Die Dichtung ist vorzugsweise in dem Träger fixiert. D. h. die Dichtung bewegt sich in Richtung der Längsachse nicht relativ zu dem Träger, vielmehr bewegt sich der Betätigungsstift relativ zu dem Träger und damit auch relativ zu der Dichtung. Der Betätigungsstift liegt vorzugsweise mit seiner Außenumfangsfläche an dem Innenumfang der Dichtung an und gleitet somit entlang einer Dichtfläche der Dichtung. Die Dichtung ist bevorzugt als Dichtungsring, beispielsweise als O-Ring ausgebildet.

Weiter bevorzugt weist der Träger in Richtung der Längsachse gesehen zwischen der Dichtung und dem Federelement eine ringförmige Tragscheibe auf, an welcher sich das Federelement abstützt. Das Federelement stützt sich dabei mit einem Längsende an der Tragscheibe und mit seinem entgegengesetzten Längsende an einer Anlageschulter an dem Betätigungsstift ab. Der Betätigungsstift weist vorzugsweise an seinem ersten Axialende dazu eine dem zweiten Axialende zugewandte Anlageschulter auf. So drückt das Federelement, wenn es als Druckfeder ausgebildet ist, den Betätigungsstift in Richtung dessen ersten Axialendes von der Tragscheibe weg. Die Tragscheibe weist in ihrem Inneren eine Öffnung auf, durch welche sich der Betätigungsstift hindurcherstreckt, sodass das Federelement an einer Seite der Tragscheibe und das freie zweie Axialende des Betätigungsstiftes, welches den Eingriffsbereich zum Eingriff mit der Welle aufweist, an der entgegengesetzten zweiten axialen Seite der Tragscheibe gelegen ist.

Das Federelement ist vorzugsweise als Schraubenfeder ausgebildet. Dabei wirkt das Federelement, wie oben beschrieben vorzugsweise als Druckfeder.

Gemäß einer weiteren bevorzugten Ausführungsform weist die Tragscheibe einen radial nach außen auskragenden Kragen auf, welcher vorzugsweise zur Aufnahme zumindest einer Schweißnaht ausgebildet ist. So dient die Tragscheibe nicht nur dazu, das Federelement abzustützen, sondern kann gleichzeitig dazu dienen, mit angrenzenden Bauteilen, insbesondere dem Spaltrohr verschweißt zu werden. D. h. die aufzunehmende Schweißnaht ist insbesondere die Schweißnaht, welche zur Verbindung mit dem Spaltrohr dient. Besonders bevorzugt definiert die Tragscheibe mit ihrem Außenumfang den größten Außendurchmesser der Betätigungseinrichtung, d. h. vorzugsweise definiert der Außenumfang des Kragens der Tragscheibe den größten Außendurchmesser der Betätigungseinrichtung.

Das Federelement ist weiter bevorzugt außenumfänglich von einem Federgehäuse umgeben. Dieses Federgehäuse kann einen nach innen gerichteten Vorsprung bzw. eine radial nach innen gerichtete Schulter aufweisen, welche als Anschlag für den Betätigungsstift dient. So kann der Betätigungsstift mit seinem ersten Axialende an einem solchen Anschlag bzw. einer solchen Schulter zur Anlage kommen. Der Anschlag bzw. die Schulter ist vorzugsweise als ringförmige Auskragung am Innenumfang des Federgehäuses ausgebildet und weist im Inneren eine Öffnung auf, durch welche ein Werkzeug in das erste Axialende des Betätigungsstiftes eingreifen kann. Das Federgehäuse ist vorzugsweise im Wesentlichen rohrförmig und umgibt das Federelement außenumfänglich und schützt so das Federelement im Inneren vor Verunreinigungen und Kontakt mit externen Bauteilen.

Besonders bevorzugt grenzt das Federgehäuse mit einem Axialende an die Tragscheibe an. Weiter bevorzugt ist das Federgehäuse mit der Tragscheibe verbunden, insbesondere verschweißt. Dabei ist das Federgehäuse vorzugsweise mit demjenigen Axialende mit der Tragscheibe verbunden, welches dem Axialende, am welchem ein Anschlag für den Betätigungsstift ausgebildet ist, entgegengesetzt ist. Auf diese Weise werden der Betätigungsstift und das Federelement zwischen der Tragscheibe und dem Federgehäuse fixiert. Durch Verschweißen des Federgehäuses mit der Tragscheibe wird so der Aufnahmeraum, in welchem das Federelement angeordnet ist, dauerhaft verschlossen, sodass Tragscheibe, Federgehäuse, Federelement und Betätigungsstift vorzugsweise unlösbar miteinander verbunden werden. So können diese Bauteile sicher zu einer vormontierten Baueinheit verbunden werden. Eine mögliche Schweißnaht zwischen dem Federgehäuse und der Tragscheibe muss dabei nicht dicht ausgebildet werden, da, wie oben erläutert, das Federelement außerhalb des mit Flüssigkeit gefüllten Bereiches angeordnet wird.

Die Dichtung ist ferner bevorzugt im Inneren eines ringförmigen Dichtungsgehäuses angeordnet. Dabei dient das Dichtungsgehäuse insbesondere der Zentrierung und Fixierung der Dichtung in dem Träger. Wie das Federgehäuse ist somit vorzugsweise auch das Dichtungsgehäuse Teil des Trägers.

Das Dichtungsgehäuse ist vorzugsweise an seinem ersten axialen Ende mit der Tragscheibe verbunden, insbesondere verschweißt. Dabei kann insbesondere eine dichte Verbindung zwischen dem Dichtungsgehäuse und der Tragscheibe, beispielsweise durch eine durchgehende umfängliche Schweißnaht erreicht werden. Beispielsweise durch Laserschweißen ist das Erzeugen einer solchen Schweißnaht auch bei bereits eingesetzter Dichtung möglich, ohne dass die Dichtung durch die Wärmeeinwirkung beschädigt wird. So kann auch die Dichtung über das Dichtungsgehäuse in dem Träger dauerhaft fixiert werden und Teil der vorgefertigten Baueinheit sein.

Weiter bevorzugt ist das Federgehäuse an einer ersten Seite, d. h. Axialseite der Tragscheibe und das Dichtungsgehäuse an einer entgegengesetzten zweiten Seite bzw. Axialseite der Tragscheibe gelegen. D. h. die Tragscheibe liegt zwischen dem Feder- und dem Dichtungsgehäuse, wobei vorzugsweise sowohl das Federgehäuse als auch das Dichtungsgehäuse mit der Tragscheibe verschweißt sind. Besonders bevorzugt kann dies durch eine einzige ringförmige Schweißnaht erfolgen. Es ist jedoch auch möglich, beide Schweißungen separat durchzuführen. Die Tragscheibe bildet ein zentrales Element der Betätigungseinrichtung und dient darüber hinaus, wie oben beschrieben, vorzugsweise der Befestigung im Spaltrohr, insbesondere durch Verschweißen. Dadurch ist eine einfache Montage der vorgefertigten Baueinheit bestehend aus Tragscheibe, Federgehäuse und Dichtungsgehäuse mit eingesetzter Feder, eingesetztem Betätigungsstift und eingesetzter Dichtung möglich. Das Federgehäuse weist vorzugsweise eine größere axiale Länge als das Dichtungsgehäuse auf. Das Federgehäuse liegt bei der am Spaltrohr montierten Betätigungseinrichtung außerhalb des Spaltrohres, während das Dichtungsgehäuse in einer Ausnehmung des Spaltrohres eingreift. Dadurch, dass das Dichtungsgehäuse eine kürzere axiale Länge aufweist, welche vorzugsweise nur geringfügig länger als die axiale Bauhöhe der Dichtung ist, ist somit nur wenig Bauraum zur Aufnahme der Betätigungseinrichtung im Inneren des Spaltrohres erforderlich.

Weiter bevorzugt weist das ringförmige Dichtungsgehäuse an seinem zweiten axialen Ende einen radial nach innen gerichteten Kragen auf, dessen Innendurchmesser kleiner als ein Außendurchmesser der insbesondere ringförmigen Dichtung ist. D. h. dieser Kragen ist an einem Axialende des Dichtungsgehäuses ausgebildet, welches dem Axialende, welches mit der Tragscheibe verbunden wird, entgegengesetzt ist. Durch den nach innen gerichteten Kragen kann eine axiale Fixierung der Dichtung zwischen der Tragscheibe und dem Kragen erreicht werden. Besonders bevorzugt hält der Kragen die Dichtung in dichtender Anlage an einer Oberfläche der Tragscheibe. Eine solche dichtende Anlage an der Tragscheibe hat den Vorteil, dass eine dichte Verbindung zwischen dem Dichtungsgehäuse und der Tragscheibe nicht erforderlich ist, da die Dichtung dann direkt zwischen dem Außenumfang des Betätigungsstiftes und der Tragscheibe abdichtet. Alternativ oder zusätzlich kann die Dichtung am Innenumfang des Dichtungsgehäuses dichtend zur Anlage kommen und das Dichtungsgehäuse dicht mit der Tragscheibe verbunden sein. Der Kragen des Dichtungsgehäuses lässt in seinem Inneren eine Öffnung, welche so groß ist, dass der Betätigungsstift sich durch diese hindurchstrecken kann und durch diese hindurch bewegen kann.

Die Tragscheibe, das Federgehäuse und/oder das Dichtungsgehäuse sind bevorzugt aus Blech geformt. Besonders bevorzugt sind das Federgehäuse und das Dichtungsgehäuse als Formteile aus Metallblech, insbesondere als Tiefziehteile ausgebildet. Die Tragscheibe ist vorzugsweise ebenfalls aus Metall ausgebildet und kann aus einem Blech geschnitten oder gestanzt sein. D. h. die Struktur des Trägers wird hier ausschließlich aus kostengünstigen Blechteilen gefertigt, welche miteinander verschweißt werden. So kann auf eine spanende Bearbeitung oder Gussteile verzichtet werden. Besonders bevorzugt sind die Bauteile aus rostfreiem Stahlblech gefertigt.

Gemäß einer besonderen Ausführungsform der Erfindung kann zumindest ein Bauteil der Betätigungseinrichtung, insbesondere des Trägers einstückig mit einem Spaltrohr ausgebildet oder von einem Teil des Spaltrohres gebildet sein. Dieses Bauteil ist besonders bevorzugt ein die Dichtung umgebendes Dichtungsgehäuse. Auf diese Weise kann ein Bauteil eingespart werden und darüber hinaus eine besonders gute Abdichtung zwischen dem Spaltrohr und dem Betätigungsstift erreicht werden, da die Dichtung so direkt am Spaltrohr anliegen kann. Am Spaltrohr kann durch Umformen eines axialen Endes bzw. Bodens ein Aufnahmeraum für die Dichtung geschaffen werden, in welchen die Dichtung von der Außenseite her eingelegt wird. Anschließend kann die oben beschriebene Tragscheibe mit dem Federgehäuse an die Stirnseite des Spaltrohres angeschweißt werden, wodurch gleichzeitig die Dichtung in diesem Dichtungsraum fixiert wird.

Die Dichtung kann als einfacher O-Ring ausgebildet sein. Weiter bevorzugt ist die Dichtung als ein Dichtungsring mit einem derartigen Querschnitt ausgebildet, dass der Innenumfang der Dichtung eine kürze axiale Länge als die axiale Länge am Außenumfang der Dichtung aufweist. Bei einer solchen Form hat der Dichtungsring einen im Wesentlichen dreieckigen Querschnitt und es wird eine kleine Anlagefläche am Innenumfang, welche mit der Außenumfangsfläche des Betätigungsstiftes in dichtende Anlage kommt, geschaffen, sodass in diesem Bereich die Reibung minimiert wird. Gleichzeitig wird am Außenumfang eine größere Anlage bzw. Dichtungsfläche zur dichtenden Anlage in dem Träger, insbesondere einem umgebenden Dichtungsgehäuse geschaffen.

Gemäß einer weiteren bevorzugten Ausführungsform kann in das Innere des Federgehäuses ein Schmierstoff bzw. ein Schmiermittel eingebracht sein, welches den Bereich zwischen dem Betätigungsstift und der Dichtung schmiert, um dort die Reibung und den Verschleiß zu minimieren. Ein solcher Schmierstoff kann beispielsweise durch die axiale Öffnung des Federgehäuses, welches zum Durchführen eines Werkzeuges zu dem Betätigungsstift dient, in diesem Raum eingebracht werden.

Gegenstand der Erfindung ist darüber hinaus ein Pumpenaggregat, in welchem eine Betätigungseinrichtung gemäß der vorangehenden Ausführungen Verwendung findet. Das Pumpenaggregat weist einen als Spaltrohrmotor ausgebildeten elektrischen Antriebsmotor auf. Das Spaltrohr ist dabei zwischen Stator und Rotor des elektrischen Antriebsmotors angeordnet. Im Inneren des Spaltrohrs befindet sich eine den Rotor tragende Antriebswelle des Pumpenaggregates. Die Antriebswelle kann auch integral mit dem Rotor ausgebildet sein. In diesem Fall ist der Rotor als Welle gemäß der vorangehenden Beschreibung anzusehen. In einer axialen Stirnseite, d. h. dem axialen Boden des Spaltrohres ist eine Betätigungseinrichtung gemäß der vorangehenden Beschreibung angeordnet. Eine solche Betätigungseinrichtung kann z. B. zum Deblockieren der Welle bzw. des Rotors des Pumpenaggregates verwendet werden. Dazu wird der Betätigungsstift gegen die Federkraft in das Innere des Spaltrohres gedrückt, bis das Axialende mit dem Eingriffsbereich des Betätigungsstiftes mit einem korrespondierenden Eingriffsbereich am Axialende der Welle bzw. des Rotors im Inneren des Spaltrohres in Anlage oder Eingriff kommt. Anschließend kann durch geringfügige Axialbewegung der Welle bzw. des Rotors und/oder Drehbewegung des Rotors eine mögliche Blockade in den Lagern gelöst werden. Beim Lösen der axialen Kraft auf den Betätigungsstift wird dieser dann durch die Federkraft des Federelementes wieder zurück in seine Ruhelage, d. h. aus dem Inneren des Spaltrohres heraus bewegt, sodass dass zweite Axialende des Betätigungsstiftes von der Welle bzw. dem Rotor außer Eingriff tritt.

Gemäß einer besondern Ausführungsform des erfindungsgemäßen Pumpenaggregates ist das Spaltrohr zwischen dem Rotor und dem Stator eines elektrischen Antriebsmotors angeordnet und es ist an das axiale Ende des Antriebsmotors ein Elektronikgehäuse angesetzt, welches einen sich in axialer Richtung durch das Elektronikgehäuse hindurch erstreckenden und der Betätigungseinrichtung gegenüberliegenden Kanal aufweist, dessen Querschnitt an den Querschnitt eines aufzunehmenden Werkzeuges, welches mit der Werkzeugaufnahme in Eingriff bringbar ist, angepasst ist. Das Elektronikgehäuse nimmt insbesondere elektrische und/oder elektronische Bauteile zur Regelung des Antriebsmotors, beispielsweise einen Frequenzumrichter auf. Der Kanal ist dabei vorzugsweise so ausgebildet, dass dieser vollständig gegenüber dem Innenraum des Elektronikgehäuses abgedichtet ist, d. h. außerhalb des Innenraums des Elektronikgehäuses gelegen ist. Insofern ist es nicht erforderlich, das Elektronikgehäuse zu öffnen, um ein Werkzeug in den Kanal zur Betätigung der Betätigungseinrichtung einzusetzen.

Der Kanal weist einen Querschnitt auf, welcher größer als der Durchmesser des aufzunehmenden Werkzeuges ist. Dabei ist der Querschnitt vorzugsweise nur geringfügig größer. Bevorzugt ist der Kanal so ausgebildet, dass er eine Führung des Werkzeuges in axialer Richtung und bevorzugt im Wesentlichen zentriert bezüglich der Längsachse des Kanals ermöglicht. Die Längsachse des Kanals verläuft dabei bevorzugt entlang der Längsachse des Betätigungsstiftes und der Welle bzw. des Rotors des Pumpenaggregates. So führt der Kanal das Werkzeug in bzw. zu der Werkzeugaufnahme am ersten Axialende des Betätigungsstiftes. Dazu weist der Kanal weiter bevorzugt eine gewisse Mindestlänge auf, welche ein Verkippen bzw. Neigen des Werkzeuges bezüglich der Längsachse des Kanals begrenzt bzw. verhindert.

Nachfolgend wird die Erfindung beispielhaft anhand der beigefügten Figuren beschrieben. In diesen zeigt:
- Fig. 1: eine Explosionsansicht eines Pumpenaggregates gemäß der Erfindung,
- Fig. 2: eine Schnittansicht des Antriebsmotors eines erfindungsgemäßen Pumpenaggregates,
- Fig. 3: eine geschnittene Detailansicht der Deblockiereinrichtung in dem Antriebsmotors gemäß Fig. 2,
- Fig. 4: eine perspektivische Detailansicht des Betätigungsstiftes der Deblockiereinrichtung gemäß Fig. 3,
- Fig. 5: eine teilweise geschnittene Seitenansicht des Betätigungsstiftes gemäß Fig. 4 und
- Fig. 6: eine alternative Ausgestaltung der Dichtung in der Deblockiereinrichtung gemäß Fig. 3.

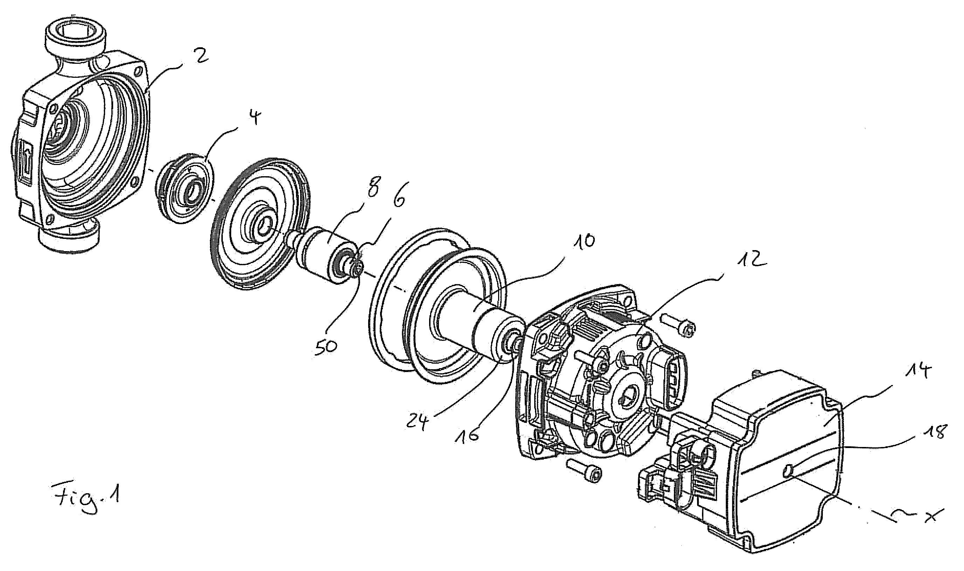

Nachfolgend wird ein Pumpenaggregat beschrieben, in welchem die erfindungsgemäße Betätigungseinrichtung in Form einer Deblockiereinrichtung zum Einsatz kommt. Fig. 1 zeigt in einer Explosionsansicht den grundsätzlichen Aufbau eines solchen Pumpenaggregates. Das Pumpenaggregat weist in bekannter Weise ein Pumpengehäuse 2 mit einem darin angeordneten Laufrad 4 auf. Das Laufrad 4 ist über eine Welle 6 mit dem Rotor 8 eines elektrischen Antriebsmotors verbunden. Der Rotor 8 liegt im Inneren eines Spaltrohrs 10, welches den Rotor 8 von einem Stator 20 trennt, welcher im Inneren des Statorgehäuses bzw. Motorgehäuses 12 angeordnet ist. Axial in Richtung der Längs- bzw. Drehachse X ist an dem Statorgehäuse 12 ein Elektronikgehäuse 14 bzw. ein Klemmenkasten 14 angeordnet, in welchem elektronische Bauteile zur Regelung bzw. Steuerung des Antriebsmotors angeordnet sind. Am axialen Ende des Spaltrohres 10, welches dem Pumpengehäuse 2 abgewandt ist und welches geschlossen ausgebildet ist, ist eine Betätigungseinrichtung in Form einer Deblockiereinrichtung 16 angeordnet, über welche die Welle 6 im Inneren des Spaltrohres 10 von außen gedreht werden kann. Dazu kann ein Werkzeug wie ein Schraubendreher von außen durch einen Kanal 18 im Inneren des Elektronikgehäuses 14 eingesetzt werden, mittels welchem die Deblockiereinrichtung 16 und über diese die Welle 6 bewegt werden kann. Der Kanal 18 ist zur axialen Stirnseite des Elektronikgehäuses 14 geöffnet und erstreckt sich in Längsrichtung X durch das Elektronikgehäuse 14 hindurch.

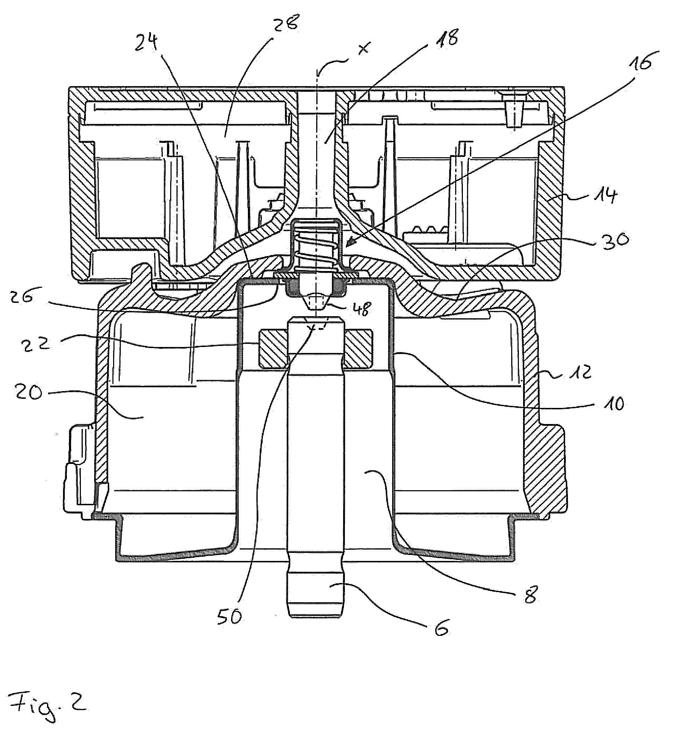

Der Aufbau und die Funktion der Deblockiereinrichtung 16 werden näher anhand von Figuren 2 - 6 beschrieben. Fig. 2 zeigt im Schnitt den elektrischen Antriebsmotor des Pumpenaggregates, welcher in dem Statorgehäuse 12 angeordnet ist. Der elektrische Antriebsmotor weist einen ringförmigen Stator 20 auf, welcher das Spaltrohr 10 außenumfänglich umgibt. Im Inneren des Spaltrohres ist der Rotor 8 auf der Welle 6 angeordnet, welche im Inneren des Spaltrohres 10 in einem Lager 22 gelagert ist. Das Lager 22 ist im Inneren des Spaltrohres fixiert. Das Spaltrohr 10 ist als Spalttopf ausgebildet und weist ein geschlossenes Axialende, d. h. einen Boden 24 auf, welcher dem Pumpengehäuse 2 abgewandt ist. Zentral bezüglich der Längs- bzw. Drehachse X des Rotors 6 ist in dem Boden 24 des Spaltrohres 10 eine Öffnung 26 ausgebildet, in welche die Deblockiereinrichtung 16 eingesetzt ist. Der Deblockiereinrichtung 16 gegenüberliegend erstreckt sich durch das Elektronikgehäuse 14 hindurch der Kanal 18. Der Kanal 18 weist eine geschlossene Umfangswandung auf und ist somit vollständig vom Innenraum 28 des Elektronikgehäuses 14 getrennt, welcher den Kanal 18 ringförmig umgibt. So kann der Innenraum 28 des Elektronikgehäuses 14 vollständig geschlossen und nach außen dicht ausgebildet werden. Durch den Kanal 18 ist dennoch die Deblockiereinrichtung 16 von außen zugänglich, wenn das Elektronikgehäuse 14 wie gezeigt an die axiale Stirnseite 30 des Statorgehäuses 12 angesetzt ist.

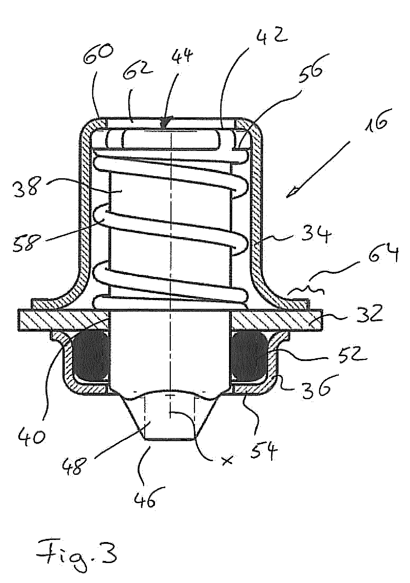

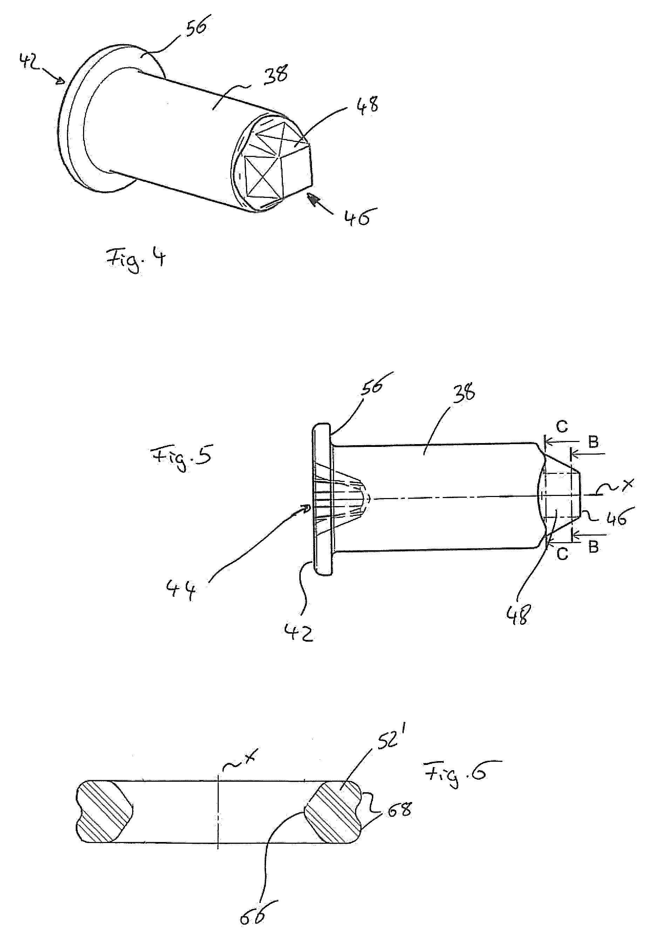

Die Deblockiereinrichtung 16, welche vergrößert in Fig. 3 gezeigt ist, weist einen Träger auf, welcher aus drei Blechbauteilen gebildet wird. Zentrales Bauteil ist eine Tragscheibe 32, welche plan- und ringförmig ausgebildet ist. Zweiter Bestandteil des Trägers ist ein Federgehäuse 34, welches an einer Axialseite bzw. Oberfläche der Tragscheibe 32 befestigt ist. An der entgegengesetzten Axialseite bzw. Oberfläche der Tragscheibe 32 ist als drittes Bauteil ein Dichtungsgehäuse 36 befestigt. Im Inneren des so gebildeten Trägers ist axial beweglich und drehbar bezüglich der Längsachse X ein Betätigungsstift 38 geführt. Der Betätigungsstift 38 ist dabei in einer zentralen Durchgangsöffnung 40 geführt und erstreckt sich so durch die Tragscheibe 32 hindurch. An einem ersten Axialende 42 weist der Betätigungsstift 38 zentral bezüglich der Längsachse X angeordnet eine Werkzeugaufnahme 44 in Form eines Kreuzschlitzes auf. In diese Werkzeugaufnahme 44 kann ein üblicher Kreuzschlitz-Schraubendreher, welcher durch den Kanal 18 eingeführt wird, eingreifen. Am entgegengesetzten zweiten Axialende 46 weist der Betätigungsstift 38 einen Eingriffsbereich auf, welcher hier als konischer Vierkant 48 ausgebildet ist. Der Vierkant 48 verjüngt sich zum zweiten Axialende 46 hin, d. h., wie Fig. 5 zeigt, ist der Querschnitt in der Ebene B - B, welche näher zum zweiten Axialende 46 gelegen ist, kleiner als der Querschnitt in der Ebene C - C, welche von dem zweiten Axialende 46 weiter beabstandet ist. Der Vierkant 48, welcher einen Eingriffsbereich bildet, ist zum Eingriff in eine korrespondierende Ausnehmung 50 am axialen Stirnende der Welle 6 ausgebildet. D. h. die Ausnehmung 50 ist vorzugsweise komplementär zu dem Vierkant 48 geformt.

Der Betätigungsstift 38 erstreckt sich vollständig durch das Dichtungsgehäuse 36 hindurch und liegt dort mit einer Außenwandung am Innenumfang einer Dichtung 52 an. Die Dichtung ist in dem Ausführungsbeispiel gemäß Fig. 2 und 3 als O-Ring ausgebildet und liegt mit ihrem Außenumfang an der Innenwandung des ringförmigen Dichtungsgehäuses 36 an. Das Dichtungsgehäuse 36 ist mit seinem ersten Axialende mit der Tragscheibe 32 verschweißt. Am entgegengesetzten Axialende weist das Dichtungsgehäuse 36 einen radial nach innen gerichteten ringförmigen Kragen 54 auf. Der Kragen 54 weist einen Innendurchmesser auf, welcher größer ist als der Außendurchmesser des Betätigungsstiftes 38, sodass dieser sich durch den Kragen 54 nach außen hindurch erstrecken kann, sodass der Eingriffsbereich in Form des Vierkantes 48 außerhalb des Dichtungsgehäuses 36 gelegen ist. Gleichzeitig weist der Kragen 54 einen Innendurchmesser auf, welcher kleiner ist als Außendurchmesser der Dichtung 52, sodass die Dichtung 52 an der Innenseite des Kragens 54 zur Anlage kommen kann und die Dichtung so zwischen der Tragscheibe 32 und dem Kragen 54 in axialer Richtung X fixiert wird. Bevorzugt drückt der Kragen 54 die Dichtung 52 gegen die Tragscheibe 32, sodass die Dichtung 52 dichtend an der Tragscheibe 32 und am Außenumfang des Betätigungsstiftes 38 anliegt. Wenn die Dichtung 52 so gelegen ist, ist es nicht zwingend erforderlich, das Dichtungsgehäuse 36 dicht mit der Tragscheibe 32 zu verbinden, was jedoch bevorzugt ist. Die Verbindung zwischen Dichtungsgehäuse 36 und Tragscheibe 32 erfolgt vorzugsweise durch Verschweißen.

Angrenzend an sein erstes Axialende 42 weist der Betätigungsstift 38 eine radial nach außen auskragende und dem zweiten Axialende 46 zugewandte Anlageschulter 56 auf. Zwischen der Anlageschulter 56 und der Tragscheibe 32 ist ein Federelement 58 in Form einer als Druckfeder ausgebildeten Schraubenfeder gelegen. Das Federelement 58 übt so eine Druckkraft auf den Betätigungsstift 38 in Richtung seines ersten Axialendes 42 aus, sodass der Betätigungsstift 38 in seine in Fig. 3 gezeigte Ruhelage gedrückt wird, in welcher der Eingriffsbereich in Form des Vierkantes 48 sich in seiner zurückgezogenen Position befindet, in welcher er von der Ausnehmung 50 in der Welle 6 außer Eingriff ist, wie in Fig. 2 gezeigt ist. In dieser Ruhelage liegt der Betätigungsstift 38 mit dem Außenumfang seines ersten Axialendes 42 an einem radial nach innen gerichteten ringförmigen Kragen 60 des Federgehäuses 34 an. Der Kragen 60 umschließt eine zentrale Öffnung 62, durch welche hindurch ein Werkzeug in die Werkzeugaufnahme 44 eingesetzt werden kann. Die Dichtung 52 ist zwischen dem Eingriffsbereich 48 und dem Federelement 58 gelegen, sodass das Federelement 58 im Trockenen liegt.

Das Federgehäuse 34 ist mit seinem dem Kragen 60 abgewandten Axialende mit der Tragscheibe 32 verschweißt. Auf diese Weise ist das Federelement 58 gemeinsam mit dem Betätigungsstift 38 in axialer Richtung zwischen der Tragscheibe 32 und dem Kragen 60 des Federgehäuses 34 fixiert. Der Betätigungsstift 38 ist dabei in Richtung der Längsachse X gegen die Feder relativ zu dem Träger 32 verschiebbar, sodass der Eingriffsbereich in Form des Vierkantes 48 weiter aus dem Dichtungsgehäuse 36 heraus bewegt wird und in die Ausnehmung 50 an der axialen Stirnseite der Welle hinein gedrückt werden kann. Dabei kann der Betätigungsstift 38 dann mit Hilfe des Werkzeuges in der Werkzeugaufnahme 44 um die Längsachse X gedreht werden, um eine Blockade des Rotors 8 zu lösen. Auf diese Drehbewegung könnte verzichtet werden, wenn eine axiale Beweglichkeit der Welle 6 in dem Lager 22 gegeben ist. Dann kann eine Blockade auch durch reine Axialbewegung des Betätigungsstiftes 38 und der Welle 6 erreicht werden.

Die Deblockiereinrichtung 16, wie sie in Fig. 3 gezeigt ist, bildet eine vorgefertigte Baueinheit, welche aus dem beschriebenen dreiteiligen Träger, der Dichtung 52, dem Federelement 58 und dem Betätigungsstift 38 gebildet wird. Der Träger ist dabei aus drei Blechteilen gebildet, wobei die Tragscheibe 32 plan aus einem Blech gestanzt ist und das Federgehäuse 34 und das Dichtungsgehäuse 36 als Tiefziehteile aus Blech geformt sind, wobei das Federgehäuse 34 eine größere axiale Länge in Richtung der Längsachse X als das Dichtungsgehäuse 36 aufweist. Dies hat den Vorteil, dass das Dichtungsgehäuse 36 nur um ein geringes Maß in das Innere des Spaltrohres hineinragt, sodass dort nur wenig Bauraum für die Deblockiereinrichtung erforderlich ist. Das Federgehäuse 34 wird mit der Tragscheibe 32 nach Einsetzen des Betätigungsstiftes und des Federelementes 58 verschweißt. So sind diese Teile unlösbar miteinander montiert. Das Dichtungsgehäuse 36 wird nach Einsetzen der Dichtung 52 mit Tragscheibe 32 verschweißt, sodass auch diese Teile fest und unlösbar montiert sind. Dabei ist es denkbar, das Federgehäuse 34, das Dichtungsgehäuse 36 und die Tragscheibe 32 mit einer einzigen Schweißnaht miteinander zu verschweißen.

Die Tragscheibe 32 erstreckt sich in radialer Richtung über den Außenumfang des Federgehäuses 34 und des Dichtungsgehäuses 36 hinaus und bildet so einen umfänglichen radial nach außen vorstehenden Kragen 64, an welchem die gesamte in der Weise vormontierte Deblockiereinrichtung 36 mit dem Spaltrohr 10 im Umfang der Öffnung 26 verschweißt werden kann. Durch eine ringförmige Schweißnaht kann dabei die Deblockiereinrichtung 16 bzw. deren Tragscheibe 32 dicht mit dem Boden 24 im Umfangsbereich der Öffnung 26 verbunden werden. Anstelle einer solchen dichten Verschweißung wäre es z. B. auch denkbar, das Dichtungsgehäuse 36 direkt einstückig mit dem Boden 24 auszubilden bzw. in diesem auszuformen. Dann könnte auf das separate Dichtungsgehäuse 36 verzichtet werden und die Tragscheibe 32 nach Einlegen der Dichtung 52 direkt mit dem Boden 24 verschweißt werden.

Der Innenraum des Federgehäuses 34 kann mit einem Schmierstoff bzw. Schmiermittel gefüllt werden, um die Reibung und den Verschleiß zwischen der Dichtung 52 und der Umfangswand des Betätigungsstiftes 38 zu minimieren. Vorzugsweise kann ein solcher Schmierstoff nach dem Anbringen der Deblockiereinrichtung 16 an dem Spaltrohr durch die Öffnung 62 eingeführt werden, wenn der Betätigungsstift 38 um ein gewisses Maß gegen das Federelement 58 bewegt wird.

Der Kanal 18 in dem Elektronikgehäuse 14 ist so ausgebildet, dass er einen Innendurchmesser aufweist, welcher kleiner ist als der Außendurchmesser der Deblockiereinrichtung 16 ist, wobei der größte Außendurchmesser der Deblockiereinrichtung 16 hier von dem Außendurchmesser der Tragscheibe 32 bestimmt wird. Der Innendurchmesser des Kanals 18 ist an das aufzunehmende Werkzeug angepasst, so dass dieses beim Einsetzen geführt wird und zentriert bezüglich der Längsachse X in die Werkzeugaufnahme 44 bewegt werden kann. Das bedeutet, der Innendurchmesser des Kanals 18 ist vorzugsweise geringfügig größer als der Außendurchmesser eines üblichen Kreuzschlitz-Schraubendrehers, welcher hier zur Bewegung des Betätigungsstiftes 38 durch Eingriff in die Werkzeugaufnahme 44 eingesetzt werden soll. Eine solche Führung wird dabei insbesondere auch durch die Länge des Kanals 18 in axialer Richtung X sichergestellt. Die axiale Länge des Kanals 18 ist größer, vorzugsweise mehr als dreimal so groß als der Durchmesser des Kanals 18.

Fig. 6 zeigt eine alternative Ausführungsform zu der Dichtung 52. Die in Fig. 6 gezeigte Dichtung 52' weist keinen runden bzw. kreisförmigen, sondern einen im Wesentlichen dreieckigen Querschnitt auf, wobei die axiale Länge am Innenumfang der Dichtung 52' in Richtung der Längsachse X kürzer als die axiale Länge am Außenumfang der Dichtung 52' ist. So wird am Innenumfang ein sehr kleiner Anlagebereich 66 gebildet, welcher am Außenumfang des Betätigungsstiftes 38 dichtend zur Anlage kommt. Am Außenumfang der Dichtung 52' sind hier zwei axial voneinander beabstandete wulstförmige Anlagebereiche 68 ausgebildet, welche am Außenumfang in axialer Richtung X eine größere Länge als der Anlagebereich 66 aufweisen und zur Anlage am Innenumfang des Dichtungsgehäuses 36 vorgesehen sind.

### Bezugszeichenliste

- 2: - Pumpengehäuse
- 4: - Laufrad
- 6: - Welle
- 8: - Rotor
- 10: - Spaltrohr
- 12: - Statorgehäuse
- 14: - Elektronikgehäuse
- 16: - Deblockiereinrichtung (Betätigungseinrichtung)
- 18: - Kanal
- 20: - Stator
- 22: - Lager
- 24: - Boden
- 26: - Öffnung
- 28: - Innenraum
- 30: - axiale Stirnseite
- 32: - Tragscheibe
- 34: - Federgehäuse
- 36: - Dichtungsgehäuse
- 38: - Betätigungsstift
- 40: - Durchgangsöffnung
- 42: - erstes Axialende
- 44: - Werkzeugaufnahme
- 46: - zweites Axialende
- 48: - Vierkant (Eingriffsbereich)
- 50: - Ausnehmung
- 52,52': - Dichtung
- 54: - Kragen
- 56: - Anlageschulter
- 58: - Federelement
- 60: - Kragen
- 62: - Öffnung
- 64: - Kragen
- 66, 68: - Anlagebereiche

- X: - Längsachse

## Patentansprüche

1. Betätigungseinrichtung (16) für ein Pumpenaggregat, welche zum Einsatz in einem Spaltrohr (10) eines Pumpenaggregates zur Kraftbeaufschlagung einer in dem Spaltrohr (10) gelegenen Welle (6) vorgesehen ist, mit
einem zur Verbindung mit dem Spaltrohr (10) ausgebildeten Träger (32, 34, 36), welcher einen sich entlang einer Längsachse (X) erstreckenden Durchgang aufweist,
einem in diesem Durchgang entlang dessen Längsachse (X) geführten Betätigungsstift (38), welcher an seinem ersten Axialende (42) eine Werkzeugaufnahme (44) und an seinem entgegengesetzten zweiten Axialende (46) einen Eingriffsbereich (48) zur Kraftübertragung auf eine Welle (6) aufweist, und
einem zwischen dem Betätigungsstift (38) und dem Träger (32, 34, 36) angeordneten Federelement (58), welches den Betätigungsstift (38) in Richtung seines ersten Axialendes (42) mit einer Federkraft beaufschlagt,
**dadurch gekennzeichnet, dass**
zwischen dem Träger (32, 34, 36) und dem Betätigungsstift (38) in einem Bereich zwischen dem Federelement (58) und dem zweiten Axialende (46) des Betätigungsstiftes (38) eine Dichtung (52, 52') angeordnet ist.

2. Betätigungseinrichtung nach Anspruch 1, **dadurch gekennzeichnet, dass** der Träger (32, 34, 36) zur dichten Verbindung mit einem Spaltrohr (10) ausgebildet ist.

3. Betätigungseinrichtung nach Anspruch 1 oder 2, **dadurch gekennzeichnet, dass** der Träger (32, 34, 36) zum Verschweißen mit einem Spaltrohr (10) ausgebildet ist und insbesondere einen umfänglichen Kragen (64) zur Aufnahme einer Schweißnaht aufweist.

4. Betätigungseinrichtung nach einem der vorangehenden Ansprüche, **dadurch gekennzeichnet, dass** der Betätigungsstift (38) an seinem ersten Axialende (42) eine als Kreuzschlitz ausgebildete Werkzeugaufnahme (44) aufweist.

5. Betätigungseinrichtung nach einem der vorangehenden Ansprüche, **dadurch gekennzeichnet, dass** der Eingriffsbereich (48) am zweiten Axialende (46) des Betätigungsstiftes (38) einen rechteckigen und insbesondere quadratischen Querschnitt aufweist.

6. Betätigungseinrichtung nach einem der vorangehenden Ansprüche, **dadurch gekennzeichnet, dass** die Dichtung (52, 52') im Träger (32, 34, 36) fixiert ist.

7. Betätigungseinrichtung nach einem der vorangehenden Ansprüche, **dadurch gekennzeichnet, dass** der Träger (32, 34, 36) in Richtung der Längsachse (X) gesehen zwischen der Dichtung (52, 52') und dem Federelement (58) eine ringförmige Tragscheibe (32) aufweist, an welcher sich das Federelement (58) abstützt.

8. Betätigungseinrichtung nach Anspruch 7, **dadurch gekennzeichnet, dass** die Tragscheibe (32) einen radial nach außen auskragenden Kragen (64) bildet, welcher vorzugsweise zur Aufnahme zumindest einer Schweißnaht ausgebildet ist.

9. Betätigungseinrichtung nach einem der vorangehenden Ansprüche, **dadurch gekennzeichnet, dass** das Federelement (58) außenumfänglich von einem Federgehäuse (34) umgeben ist.

10. Betätigungseinrichtung nach Anspruch 9 und einem der Ansprüche 7 und 8, **dadurch gekennzeichnet, dass** das Federgehäuse (34) mit der Tragscheibe (32) verbunden, insbesondere verschweißt ist.

11. Betätigungseinrichtung nach einem der vorangehenden Ansprüche, **dadurch gekennzeichnet, dass** die Dichtung (52, 52') im Inneren eines ringförmigen Dichtungsgehäuses (36) angeordnet ist.

12. Betätigungseinrichtung nach Anspruch 11 und einem der Ansprüche 7 und 8, **dadurch gekennzeichnet, dass** das Dichtungsgehäuse (36) an seinem ersten axialen Ende mit der Tragscheibe (32) verbunden, insbesondere verschweißt ist.

13. Betätigungseinrichtung nach Anspruch 9 und 11, **dadurch gekennzeichnet, dass** das Federgehäuse (34) an einer ersten Seite der Tragscheibe (32) und das Dichtungsgehäuse (36) an einer entgegengesetzten zweiten Seite der Tragscheibe (32) gelegen ist.

14. Betätigungseinrichtung nach Anspruch 12 oder 13, **dadurch gekennzeichnet, dass** das ringförmige Dichtungsgehäuse (36) an seinem zweiten axialen Ende einen radial nach innen gerichteten Kragen (54) aufweist, dessen Innendurchmesser kleiner als ein Außendurchmesser der Dichtung (52, 52') ist.

15. Betätigungseinrichtung nach einem der Ansprüche 7 bis 14, **dadurch gekennzeichnet, dass** die Tragscheibe (32), das Federgehäuse (34) und/oder das Dichtungsgehäuse (36) aus Blech geformt sind.

16. Betätigungseinrichtung nach einem der vorangehenden Ansprüche, **dadurch gekennzeichnet, dass** zumindest ein Bauteil der Betätigungseinrichtung, insbesondere ein die Dichtung (52, 52') umgebendes Dichtungsgehäuse (36) einstückig mit einem Spaltrohr (10) ausgebildet ist oder von einem Teil des Spaltrohres (10) gebildet wird.

17. Betätigungseinrichtung nach einem der vorangehenden Ansprüche, **dadurch gekennzeichnet, dass** die Dichtung (52') als Dichtungsring mit einem derartigen Querschnitt ausgebildet ist, dass der Innenumfang der Dichtung (52') eine kürzere axiale Länge als die axiale Länge am Außenumfang aufweist.

18. Pumpenaggregat mit einem Spaltrohr, in dessen Inneren eine Antriebswelle (6) des Pumpenaggregates angeordnet ist, **dadurch gekennzeichnet, dass** in einer axialen Stirnseite (24) des Spaltrohres (10) eine Betätigungseinrichtung (16) nach einem der vorangehenden Ansprüche angeordnet ist.

19. Pumpenaggregat nach Anspruch 18, **dadurch gekennzeichnet, dass** das Spaltrohr (10) zwischen dem Rotor (8) und dem Stator (20) eines elektrischen Antriebsmotors des Pumpenaggregates angeordnet ist und an das axiale Ende des Antriebsmotors ein Elektronikgehäuse (14) angesetzt ist, welches einen sich in axialer Richtung (X) durch das Elektronikgehäuse (14) hindurch erstreckenden und der Betätigungseinrichtung (16) gegenüberliegenden Kanal (18) aufweist, dessen Querschnitt an den Querschnitt eines aufzunehmenden Werkzeuges, welches mit der Werkzeugaufnahme (44) in Eingriff bringbar ist, angepasst ist.

## Claims

1. An actuation device (16) for a pump assembly which is envisaged for application in a can (10) of a pump assembly for force impingement of a shaft (6) situated in the can (10), with a carrier (32, 34, 36) which is designed for connection to the can (10) and which comprises a passage extending along a longitudinal axis (X),
an actuation pin (38) which is led in this passage along its longitudinal axis (X) and which at its first axial end (42) comprises a tool receiver (44) and at its opposite second axial end (46) comprises an engagement region (48) for force transmission onto a shaft (6), and
a spring element (58) which is arranged between the actuation pin (38) and the carrier (32, 34, 36) and which impinges the actuation pin (38) in the direction of its first axial end (42) with a spring force,
**characterised in that**
a seal (52, 52) is arranged between the carrier (32, 34, 36) and the actuation pin (38), in a region between the spring element (58) and the second axial end (46) of the actuation pin (38).

2. An actuation device according to claim 1, **characterised in that** the carrier (32, 34, 36) is designed for the sealed connection to a can (10).

3. An actuation device according to claim 1 or 2, **characterised in that** the carrier (32, 34, 36) is designed for welding to a can (10) and in particular comprises a peripheral collar (64) for receiving a weld seam.

4. An actuation device according to one of the preceding claims, **characterised in that** the actuation pin (38) at its first axial end (42) comprises a tool receiver (44) designed as a crossed slot.

5. An actuation device according to one of the preceding claims, **characterised in that** the engagement region (48) at the second axial end (46) of the actuation pin (38) has a rectangular and in particular square cross section.

6. An actuation device according to one of the preceding claims, **characterised in that** the seal (52, 52') is fixed in the carrier (32, 34, 36).

7. An actuation device according to one of the preceding claims, **characterised in that** the carrier (32, 34, 36) seen in the direction of the longitudinal axis (X) comprises an annular carrier disk (32) between the seal (52, 52') and the spring element (58), on which carrier disk the spring element (58) is supported.

8. An actuation device according to claim 7, **characterised in that** the carrier disk (32) forms a radially outwardly projecting collar (64) which is preferably designed for receiving at least one weld seam.

9. An actuation device according to one of the preceding claims, **characterised in that** the spring element (58) is surrounded by a spring housing (34) at the outer periphery

10. An actuation device according to claim 9 and one of the claims 7 and 8, **characterised in that** the spring housing (34) is connected, in particular welded to the carrier disk (32).

11. An actuation device according to one of the preceding claims, **characterised in that** the seal (52, 52') is arranged in the inside of an annular seal housing (36).

12. An actuation device according to claim 11 and one of the claims 7 and 8, **characterised in that** the seal housing (36) is connected, in particular welded at its first axial end to the carrier disk (32).

13. An actuation device according to claim 9 and 11, **characterised in that** the spring housing (34) is situated at a first side of the carrier disk (32), and the seal housing (36) at an opposite second side of the carrier disk (32).

14. An actuation device according to claim 12 or 13, **characterised in that** the annular seal housing (36) at its second axial end comprises a radially inwardly directed collar (54) whose inner diameter is smaller than an outer diameter of the seal (52, 52').

15. An actuation device according to one of the claims 7 to 14, **characterised in that** the carrier disk (32), the spring housing (34) and/or the seal housing (36) are formed from sheet metal.

16. An actuation device according to one of the preceding claims, **characterised in that** at least one component of the actuation device, in particular a seal housing (36) surrounding the seal (52, 52') is designed as one piece with a can (10) or is formed by a part of the can (10).

17. An actuation device according to one of the preceding claims, **characterised in that** the seal (52') is designed as a sealing ring with such a cross section, that the inner periphery of the seal (52') has a shorter axial length than the axial length at the outer periphery.

18. A pump assembly with a can, in whose inside a drive shaft (6) of the pump assembly is arranged, **characterised in that** an actuation device (16) according to one of the preceding claims is arranged in an axial face side (24) of the can (10).

19. A pump assembly according to claim 18, **characterised in that** the can (10) is arranged between the rotor (8) and the stator (20) of an electric drive motor of the pump assembly, and an electronics housing (14) is applied onto the axial end of the drive motor, said electronics housing comprising a channel (18) which extends through the electronics housing (14) in the axial direction (X), lies opposite the actuation device (16) and whose cross section is adapted to the cross section of a tool to be received and able to be brought into engagement with the tool receiver (44).

## Revendications

1. Dispositif d'actionnement (16) pour un module de pompe, qui est destiné à être utilisé dans une gaine (10) d'un module de pompe, pour appliquer une force à un arbre (6) disposé dans la gaine (10), comprenant
un support (32, 34, 36) conformé pour être connecté à la gaine (10), qui comporte un passage s'étendant le long d'un axe longitudinal (X),
une tige d'actionnement (38) disposée dans ledit passage le long de l'axe longitudinal (X) de celui-ci, qui comporte à sa première extrémité d'axe (42) un logement d'outil (44) et à sa seconde extrémité d'axe (46) opposée une zone d'engagement (48) pour la transmission d'une force sur un arbre (6), et
un élément de ressort (58) disposé entre la tige d'actionnement (38) et le support (32, 34, 36), qui applique à la tige d'actionnement (38) une force de ressort en direction de sa première extrémité d'axe (42),
**caractérisé en ce**
**qu'**un joint d'étanchéité (52, 52') est disposé entre le support (32, 34, 36) et la tige d'actionnement (38) dans une zone entre l'élément de ressort (58) et la seconde extrémité d'axe (46) de la tige d'actionnement (38).

2. Dispositif d'actionnement selon la revendication 1, **caractérisé en ce que**, pour obtenir une connexion étanche, le support (32, 34, 36) est formé avec une gaine (10).

3. Dispositif d'actionnement selon la revendication 1 ou 2, **caractérisé en ce que** le support (32, 34, 36) est conformé pour être soudé sur une gaine (10) et comporte notamment un collet circonférentiel (64) pour recevoir un cordon de soudure.

4. Dispositif d'actionnement selon l'une des revendications précédentes, **caractérisé en ce que** la tige d'actionnement (38) comporte à sa première extrémité d'axe (42) un logement d'outil (44) ayant la forme d'une empreinte cruciforme.

5. Dispositif d'actionnement selon l'une des revendications précédentes, **caractérisé en ce que** la zone d'engagement (48) à la seconde extrémité d'axe (46) de la tige d'actionnement (38) présente une section transversale rectangulaire et plus particulièrement carrée.

6. Dispositif d'actionnement selon l'une des revendications précédentes, **caractérisé en ce que** le joint d'étanchéité (52, 52') est fixé dans le support (32, 34, 36).

7. Dispositif d'actionnement selon l'une des revendications précédentes, **caractérisé en ce que** le support (32, 34, 36) comprend, vu dans la direction de l'axe longitudinal (X), entre le joint d'étanchéité (52, 52') et l'élément de ressort (58), un disque de support annulaire (32) sur lequel l'élément de ressort (58) prend appui.

8. Dispositif d'actionnement selon la revendication 7, **caractérisé en ce que** le disque de support (32) forme un collet (64) s'étendant radialement vers l'extérieur, conformé de préférence pour recevoir au moins un cordon de soudure.

9. Dispositif d'actionnement selon l'une des revendications précédentes, **caractérisé en ce que** l'élément de ressort (58) est entouré, à sa périphérie extérieure, par un boîtier de ressort (34).

10. Dispositif d'actionnement selon la revendication 9 et l'une des revendications 7 et 8, **caractérisé en ce que** le boîtier de ressort (34) est attaché à, et notamment soudé sur, le disque de support (32).

11. Dispositif d'actionnement selon l'une des revendications précédentes, **caractérisé en ce que** le joint d'étanchéité (52, 52') est disposé à l'intérieur d'un boîtier d'étanchéité annulaire (36).

12. Dispositif d'actionnement selon la revendication 11 et l'une des revendications 7 et 8, **caractérisé en ce que**, à sa première extrémité axiale, le boîtier d'étanchéité (36) est connecté à, notamment soudé sur, le disque de support (32).

13. Dispositif d'actionnement selon la revendication 9 et 11, **caractérisé en ce que** le boîtier de ressort (34) est disposé sur un premier côté du disque de support (32) et que le boîtier d'étanchéité (36) est disposé sur un second côté opposé du disque de support (32).

14. Dispositif d'actionnement selon la revendication 12 ou 13, **caractérisé en ce que** le boîtier d'étanchéité annulaire (36) comprend, à sa seconde extrémité axiale, un collet (54) s'étendant radialement vers l'intérieur, dont le diamètre intérieur est inférieur à un diamètre extérieur du joint d'étanchéité (52, 52').

15. Dispositif d'actionnement selon l'une des revendications 7 à 14, **caractérisé en ce que** le disque de support (32), le boîtier de ressort (34) et/ou le boîtier d'étanchéité (36) sont formés en une tôle.

16. Dispositif d'actionnement selon l'une des revendications précédentes, **caractérisé en ce qu'**au moins un composant du dispositif d'actionnement, notamment un boîtier d'étanchéité (36) enfermant le joint d'étanchéité (52, 52'), est formé en une seule pièce avec une gaine (10) ou est formé par une partie de la gaine (10).

17. Dispositif d'actionnement selon l'une des revendications précédentes, **caractérisé en ce que** le joint d'étanchéité (52') est formé comme un joint annulaire avec une telle section transversale que le pourtour intérieur du joint d'étanchéité (52') présente une longueur axiale plus courte que la longueur axiale au pourtour extérieur.

18. Module de pompe avec une gaine à l'intérieur de laquelle est disposé un arbre d'entraînement (6) du module de pompe, **caractérisé en ce que**, dans une face frontale axiale (24) de la gaine (10), est disposé un dispositif d'actionnement (16) selon l'une des revendications précédentes.

19. Module de pompe selon la revendication 18, **caractérisé en ce que** la gaine (10) est disposée entre le rotor (8) et le stator (20) d'un moteur d'entraînement électrique du module de pompe et **en ce qu'**un boîtier électronique (14) est rapporté à l'extrémité axiale du moteur d'entraînement, lequel comporte un canal (18) s'étendant dans la direction axiale (X) à travers le boîtier électronique (14) et étant en regard du dispositif d'actionnement (16), dont la section transversale est adaptée à la section transversale d'un outil à recevoir qui est apte à être engagé dans la réception d'outil (44).
